# EUROPÄISCHE PATENTSCHRIFT

(11) **EP 2 399 041 B1**
(45) Veröffentlichungstag und Bekanntmachung des Hinweises auf die Patenterteilung: **12.03.2014**
(21) Anmeldenummer: 10701869.9
(22) Anmeldetag: 29.01.2010
(51) Int. Cl.: F16D 65/14, H02K 7/102, H02K 7/12, B60K 7/00

(54) **ELEKTROMECHANISCHE EINRICHTUNG ZUM ANTREIBEN UND/ODER BREMSEN EINER WELLE**
ELECTROMECHANICAL ARRANGEMENT FOR DRIVING AND/OR BRAKING A SHAFT
ÉQUIPEMENT ÉLECTROMÉCANIQUE POUR L'ENTRAÎNEMENT ET/OU LE FREINAGE D'UN ARBRE

(30) Priorität: 19.02.2009 DE 102009001014
(43) Veröffentlichungstag der Anmeldung: 28.12.2011
(73) Patentinhaber: ZF Friedrichshafen AG, 88038 Friedrichshafen (DE)
(72) Erfinder: WOLF, Daniel, 88048 Friedrichshafen (DE); MÜNSTER, Martin, 88048 Friedrichshafen (DE)
(86) Internationale Anmeldenummer: PCT/EP2010/051047
(87) Internationale Veröffentlichungsnummer: WO 2010/094544

(56) Entgegenhaltungen:
- EP-A1- 1 837 555
- EP-A1- 1 895 183
- WO-A1-03/091593
- DE-A1-102007 025 478

## Beschreibung

Die vorliegende Erfindung bezieht sich auf eine elektromechanische Einrichtung zum Antreiben und/oder Bremsen einer Welle, gemäß dem Oberbegriff des Patentanspruchs 1.

Aus dem Stand der Technik ist bekannt, in Kraftfahrzeugen hydraulische oder elektrohydraulische Bremsanlagen einzubauen. Hierbei wird durch die Betätigung des Bremspedals durch den Fahrer Druck im Hauptbremszylinder der Bremsanlage erzeugt; durch die Bremsflüssigkeit in der Leitung wird der Druck bis an die Bremskolben in den Bremssätteln weitergegeben, derart, dass die Bremskolben die Bremsbeläge von beiden Seiten fest gegen die Bremsscheibe drücken.

Aus der DE 10 2006 027 412 A1 ist eine selbstverstärkende elektromechanische Bremsvorrichtung zum Erzielen einer Reibkraft zwischen einem Reibglied und einem gegenüber dem Reibglied beweglich angeordneten Gegenstand bekannt, umfassend zumindest zwei Reibglieder, die jeweils dazu ausgebildet sind, mit dem beweglich angeordneten Gegenstand flächenhaft in Kontakt gebracht zu werden und eine erste Abstützeinrichtung zur Aufnahme eines ersten der zwei Reibglieder, wobei die erste Abstützeinrichtung mit wenigstens zwei entgegengesetzt geneigten Keilflächen ausgebildet ist. Des weiteren umfasst die bekannte Bremsvorrichtung eine zweite Abstützeinrichtung zur Aufnahme eines zweiten der zwei Reibglieder, die mit wenigstens zwei entgegengesetzt geneigten Keilflächen ausgebildet ist und eine dritte Abstützeinrichtung mit wenigstens zwei Paaren entgegengesetzt geneigter Keilflächen, die im Wesentlichen jeweils den Keilflächen der ersten Abstützeinrichtung und den Keilflächen der zweiten Abstützeinrichtung gegenüber angeordnet sind.

Ferner ist zumindest ein erster Aktuator zum Erzeugen einer Betätigungskraft auf die erste Abstützeinrichtung oder auf die zweite Abstützeinrichtung und ein die erste Abstützeinrichtung mit der zweiten Abstützeinrichtung verbindendes Verbindungselement vorgesehen, wobei das Verbindungselement dazu ausgebildet ist, die erste Abstützeinrichtung und die zweite Abstützeinrichtung in zumindest zwei unterschiedlichen Abständen zueinander zu halten.

Bei der aus der DE 10 2006 027 412 A1 bekannten Konstruktion erweist sich insbesondere die Regelung der durch die Keilwirkung selbstverstärkenden Bremswirkung als problematisch. EP 1 895 183 A1 zeigt einen Bremsmechanismus, der einen Bremsrotor zur Drehung mit dem Rad, Reibelemente, die zum Erzeugen einer Bremskraft mit dem Bremsrotor in Kontakt zu bringen sind, eine Druckkrafterzeugungseinheit zum Erzeugen einer Druckkraft der Reibelemente, so dass die Reibelemente durch Zufuhr von Bremsfluid durch einen Bremsfluidkanal zur Übertragung von Fluidruck gedrückt und gegen den Bremsrotor gepresst werden, sowie ein Gehäuse für die Druckkrafterzeugungseinheit aufweist. Weiter ist der Bremsfluidkanal in einer Wand des Motorgehäuses ausgebildet und mit einer Bremsfluidzuführöffnung verbunden, die in dem Gehäuse für die Druckkrafterzeugungseinheit vorgesehen ist. Der Bremsrotor ist ein Scheibenrotor und die Bremselemente ein erstes Reibelement und ein zweites Reibelement, die mit dem dazwischen aufgenommenen Scheibenrotor aneinander gegenüberliegend angeordnet sind. Das erste Reibelement ist an dem Motorgehäuse befestigt und das zweite Reibelement an der Druckkrafterzeugungseinheit und die Druckkrafterzeugungseinheit ist in dem Gehäuse aufgenommen und in Richtung einer Drehachse des Scheibenrotors bewegbar. Das Gehäuse an dem Motorgehäuse ist derart angebracht, dass es den Außenumfang des Scheibenrotors nicht berührt.

Der vorliegenden Erfindung liegt die Aufgabe zugrunde, eine elektromechanische Einrichtung zum Antreiben und/oder Bremsen einer Welle anzugeben, welche einfach aufgebaut ist und eine einfache Regelung der Bremswirkung ermöglicht.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine elektromechanische Einrichtung zum Antreiben und/oder Bremsen einer Welle vorgeschlagen, umfassend einen Elektromotor mit einem mit der zu bremsenden Welle drehfest verbundenen Rotor und einem in Umfangsrichtung in Betätigungsrichtung der Bremse mit einem Drehfreiheitsgrad in einem Gehäuse um die zu bremsende Welle gelagerten Stator.

Gemäß der Erfindung steht der Stator über eine Einrichtung, die eine Drehbewegung des Stators in eine axiale Bewegung zumindest eines Bremsbelags umwandelt mit dem Bremsbelag in Wirkverbindung, derart, dass bei generatorischem Betrieb des Elektromotors der Stator durch das zwischen Rotor und Stator entstehende Moment verdreht wird, wodurch der Bremsbelag mittels der Einrichtung gegen die Bremsscheibe gedrückt wird. Hierbei steht der Bremsbelag mit einer Bremsscheibe in Wirkverbindung, die wiederum mit der zu bremsenden Welle drehfest verbunden ist.

Vorzugsweise steht der Stator mit einer als Kugelgewindespindel oder Kugelrampe ausgeführten Bewegungsschraube in Wirkverbindung, so dass bei einer Drehung des Stators bei Betätigung der Bremse eine axiale Verschiebung der Bewegungsschraube relativ zum ortsfesten Gehäuse entsteht, die über eine Lagerung zur Entkopplung der Drehbewegung auf zumindest einen axial verschieblich im Gehäuse gelagerten Bremsbelag übertragen wird. Der Stator ist in diesem Fall axial betrachtet gehäusefest gelagert.

Wie bereits erläutert, wird zum Erzeugen eines Bremsmomentes der Elektromotor als Generator betrieben oder im Rahmen des Fail-Safe-Prinzips kurzgeschlossen; hierbei wird der Stator durch das zwischen Rotor und Stator entstehende Moment relativ zum Gehäuse verdreht, wodurch die Bremsbeläge über die axiale Bewegung der Bewegungsschraube gegen die Bremsscheiben gedrückt werden.

Im Rahmen einer weiteren Ausführungsform der Erfindung kann der Stator als in Abhängigkeit von der eigenen Drehbewegung axial verschieblicher Teil der Bewegungsschraube ausgeführt sein bzw. mit der Bewegungsschraube fest verbunden sein.

Gemäß einer Weiterbildung der Erfindung kann zwischen dem Stator des Elektromotors und der Bewegungsschraube eine Übersetzungsstufe, beispielsweise in Form eines Planetengetriebes, vorgesehen sein, welche über eine Bremsscheibe die Verdrehung des Stators und die Betätigung der Bremse übernimmt.

Die Erfindung wird im Folgenden anhand der beigefügten Figur beispielhaft näher erläutert. Es zeigen:
- Figur 1:: Eine schematische Schnittansicht einer ersten Ausführungsform einer erfindungsgemäßen elektromechanischen Einrichtung zum Antreiben und/oder Bremsen einer Welle;
- Figur 2:: Eine schematische Schnittansicht einer zweiten Ausführungsform einer erfindungsgemäßen elektromechanischen Einrichtung;
- Figur 3:: Eine schematische Schnittansicht einer weiteren Ausführungsform einer erfindungsgemäßen elektromechanischen Einrichtung; und
- Figur 4:: Eine schematische Schnittansicht einer vierten Ausführungsform einer erfindungsgemäßen elektromechanischen Einrichtung.

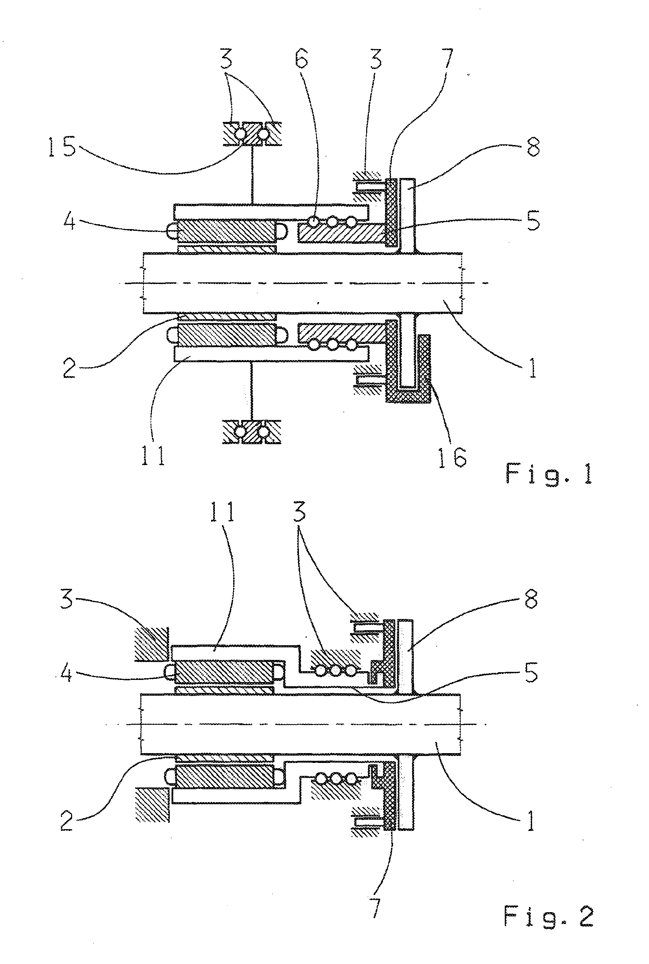

Bezugnehmend auf Figur 1 umfasst die erfindungsgemäße elektromechanische Einrichtung einen Elektromotor mit einer Welle 1, vorzugsweise mit der Antriebswelle, drehfest verbundenen Rotor 2 und einem in Umfangsrichtung in Betätigungsrichtung der Bremse mit einem Drehfreiheitsgrad in einem Gehäuse 3 um die Welle 1 gelagerten Stator 4, der axial betrachtet gehäusefest gelagert ist. In Figur 1 ist die axiale Lagerung des Stators 4 am Gehäuse 3 mit 15 bezeichnet.

Des Weiteren umfasst die Einrichtung eine als Kugelgewindespindel oder Kugelrampe ausgeführte Bewegungsschraube 5, über die eine Drehbewegung des Stators 4 bei Betätigung der Bremse in eine axiale Verschiebung der Bewegungsschraube 5 relativ zum ortsfesten Gehäuse 3 umgewandelt wird, die über eine Lagerung 6 zur Entkopplung der Drehbewegung auf zumindest einen axial verschieblich im Gehäuse 3 gelagerten Bremsbelag 7 übertragen wird. Wie aus Figur 1 ersichtlich, steht der Bremsbelag 7 mit einer mit der zu bremsenden Welle 1 drehfest verbundenen Bremsscheibe 8 in Wirkverbindung.

Die Funktionsweise der erfindungsgemäßen Einrichtung ist wie folgt: zum Erzeugen eines Bremsmomentes wird der Elektromotor als Generator betrieben, wobei der Stator 4 durch das zwischen Rotor 2 und Stator 4 entstehende Moment relativ zum Gehäuse 3 verdreht wird, wodurch der Bremsbelag 7 über die axiale Bewegung der Bewegungsschraube 5 gegen die Bremsscheibe 8 gedrückt wird. Mit 11 ist die Welle bezeichnet, in der der Stator 4 angeordnet ist.

Der Elektromotor kann auch motorisch betrieben werden; in diesem Fall wird das erzeugte Antriebsmoment an einem Anschlag in Umfangsrichtung des Stators 4 abgestützt, wodurch es über den Rotor 2 auf die Welle 1 übertragen wird.

Das in Figur 2 gezeigte Beispiel unterscheidet sich vom in Figur 1 gezeigten dadurch, dass der Stator 4 mit der Bewegungsschraube 5 fest verbunden ist und in Abhängigkeit von der eigenen Drehbewegung axial verschiebbar ausgeführt ist, wobei die Bewegungsschraube 5 am Gehäuse 3 axialen Gehäuseanschlag abgestützt und über den Rotor 2 auf die Welle 1 übertragen.

Durch die erfindungsgemäße Konzeption kann der Elektromotor im generatorischen Betrieb als Bremse und im motorischen Betrieb als Radnabenantrieb dienen, wobei in Abhängigkeit von der elektrischen Leistung des Motors Mild- oder Mid-Hybrid-Funktionalitäten und die Funktion der Lichtmaschine übernommen werden können. Bei der Bremsfunktion vollführt der Stator nur wenige Umdrehungen in Umfangsrichtung, sodass die Energieversorgung des Motors über ein flexibles Kabel oder über Wickelfedern möglich ist.

Ferner kann vorgesehen sein, dass anstelle der Hybridfunktion zum Antreiben einer Welle eine in beide Drehrichtungen wirkende Bremse realisiert werden kann. Zu diesem Zweck wird der Bremsbelag von beiden Seiten mit der Bremsscheibe in Kontakt gebracht. Diese Ausgestaltung wird in Figur 1 angedeutet, wobei der zusätzliche Bremsbelag mit dem Bezugszeichen 16 versehen ist. Alternativ dazu kann eine in beide Drehrichtungen wirkende Bremse durch eine spiegelsymmetrische Anordnung der beschriebenen Einrichtung geschaffen werden.

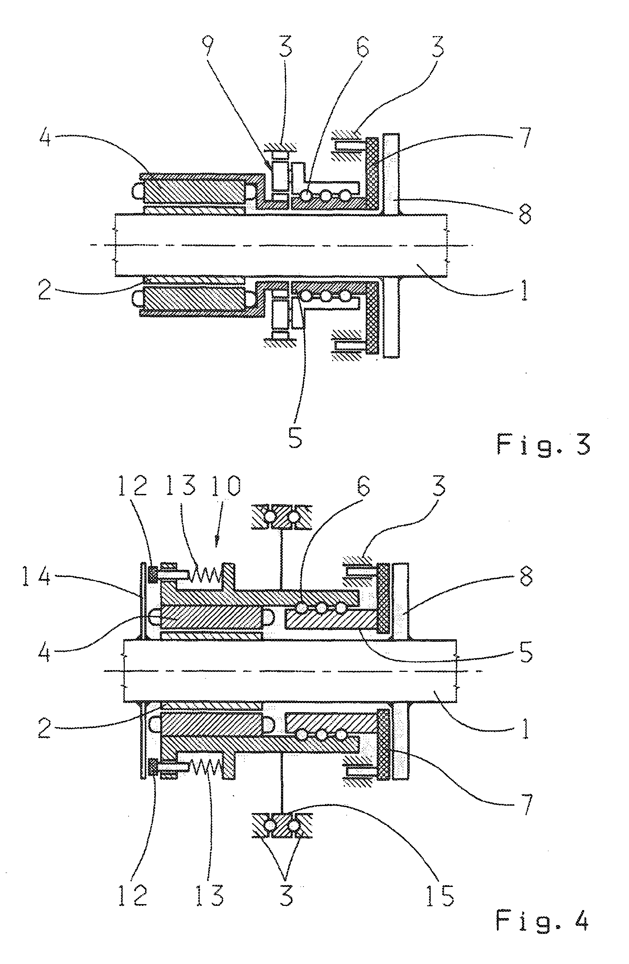

Bei dem in Figur 3 gezeigten Ausführungsbeispiel der Erfindung ist im Rahmen einer Weiterbildung der in Figur 1 dargestellten Einrichtung zwischen dem Stator 4 des Elektromotors und der Bewegungsschraube 5 eine Übersetzung vorgesehen, die vorzugsweise als Planetengetriebe 9 ausgeführt sein kann. Wie aus Figur 3 ersichtlich, ist in diesem Fall der Stator 4 mit dem Sonnenrad des Planetengetriebes 9 drehfest verbunden, wobei das Hohlrad an das Gehäuse 3 gekoppelt ist und die Bewegungsschraube 5 mit den Steg des Planetengetriebes 9 verbunden ist.

Erfindungsgemäß kann zur Sicherung der Funktion der Einrichtung gegen Ausfälle des Elektromotors eine Kupplung vorgesehen sein, die vorzugsweise im geschlossenen Zustand eine Verdrehung des Stators und somit die Betätigung der Bremse verursacht. Die Kupplung ist vorzugsweise als Einflächen-Magnetkraftkupplung ausgebildet und verbindet im geschlossenen Zustand den Stator mit der zu bremsenden Welle. Diese Ausführungsform als Weiterbildung der in Figur 1 dargestellten Einrichtung ist Gegenstand der Figur 4.

Wie Figur 4 zu entnehmen ist, umfasst die erfindungsgemäße Einrichtung eine Kupplung 10, welche vorzugsweise elektromagnetisch geöffnet wird, um dem Fail-Safe-Prinzip zu genügen. Zum Schließen der Kupplung 10 wird zumindest eine Reibfläche, vorzugsweise ein Stößel 12 durch die Kraft zumindest einer Feder 13 axial verschoben und gegen eine mit der zu bremsenden Welle 1 drehfest verbundene Scheibe 14 gedrückt, was in einer Verdrehung der Kupplung 10 und somit des mit der Kupplung 10 verbundenen Stators 4 resultiert. Dies wiederum resultiert in der Betätigung der Einrichtung als Bremse, wie bereits erläutert. Zum Öffnen der Kupplung 10 wird eine in der Figur nicht dargestellte elektromagnetische Einrichtung betätigt, die die Reibflächen bzw. Stößel 12 gegen die Kraft der Feder 13 im Öffnungssinne der Kupplung 10 bewegt.

Selbstverständlich fällt auch jede konstruktive Ausbildung, insbesondere jede räumliche Anordnung der Bauteile der erfindungsgemäßen Einrichtung an sich sowie zueinander und soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle, Abtriebswelle
- 2: Rotor
- 3: Gehäuse
- 4: Stator
- 5: Bewegungsschraube
- 6: Lagerung
- 7: Bremsbelag
- 8: Bremsscheibe
- 9: Planetengetriebe
- 10: Kupplung
- 11: Welle
- 12: Stößel
- 13: Feder
- 14: Scheibe
- 15: axiale Lagerung des Stators
- 16: Bremsbelag

## Patentansprüche

1. Elektromechanische Einrichtung zum Antreiben und /oder Bremsen einer Welle (1), wobei die Einrichtung einen Elektromotor umfasst mit einem mit der Welle (1), drehfest verbundenen Rotor (2)
**dadurch gekennzeichnet, dass**
einem in Umfangsrichtung in Betätigungsrichtung der Bremse mit einem Drehfreiheitsgrad in einem Gehäuse (3) um die Welle (1) gelagerten Stator (4),
wobei der Stator (4) über eine Einrichtung (5), die eine Drehbewegung des Stators (4) in eine axiale Bewegung zumindest eines axial verschieblich gelagerten Bremsbelags (7) umwandelt mit dem Bremsbelag (7) wirkverbunden ist, derart, dass bei Generatorbetrieb des Elektromotors der Stator (4) durch das zwischen Rotor (zwei) und Stator (4) entstehende Moment relativ zum Gehäuse (3) verdreht wird, wodurch der Bremsbelag (7) mittels der Einrichtung (5) gegen die Bremsscheibe gedrückt wird.

2. Elektromechanische Einrichtung zum Antreiben und/oder Bremsen einer Welle (1), nach Anspruch 1, **dadurch gekennzeichnet, dass** die Einrichtung (5) als eine als Kugelgewindespindel oder Kugelrampe ausgeführte Bewegungsschraube (5) ausgebildet ist, welche einerseits mit dem Stator (4) und andererseits mit zumindest einem Bremsbelag (7) in Wirkverbindung steht.

3. Elektromechanische Einrichtung zum Antreiben und/oder Bremsen einer Welle (1), nach Anspruch 2, **dadurch gekennzeichnet, dass** der Stator (4) axial betrachtet gehäusefest gelagert ist, wobei eine Drehbewegung des Stators (4) bei Betätigung der Bremse in einer axialen Verschiebung der Bewegungsschraube (5) relativ zum ortsfesten Gehäuse (3) resultiert, die über eine Lagerung (6) zur Entkopplung der Drehbewegung auf zumindest einen axial verschieblich im Gehäuse (3) gelagerten Bremsbelag (7) übertragen wird.

4. Elektromechanische Einrichtung zum Antreiben und/oder Bremsen einer Welle (1), nach Anspruch 3, **dadurch gekennzeichnet, dass** bei motorischem Betrieb des Elektromotors das erzeugte Antriebsmoment an einem Anschlag in Umfangsrichtung des Stators (4) abstützbar ist, wodurch es über den Rotor (2) auf die Welle (1) übertragen wird.

5. Elektromechanische Einrichtung zum Antreiben und/oder Bremsen einer Welle (1), nach Anspruch 2, **dadurch gekennzeichnet, dass** der Stator (4) mit der Bewegungsschraube (5) fest verbunden und in Abhängigkeit von der eigenen Drehbewegung axial verschiebbar ausgeführt ist, wobei die Bewegungsschraube (5) am Gehäuse (3) gelagert und mit dem Bremsbelag (7) in axialer Richtung formschlüssig verbunden ist.

6. Elektromechanische Einrichtung zum Antreiben und/oder Bremsen einer Welle (1), nach Anspruch 1, **dadurch gekennzeichnet, dass** bei motorischem Betrieb des Elektromotors das erzeugte Antriebsmoment an einem axialen Gehäuseanschlag abstützbar ist, wodurch es über den Rotor (2) auf die Welle (1) übertragen wird.

7. Elektromechanische Einrichtung zum Antreiben und/oder Bremsen einer Welle (1), nach einem der Ansprüche 2 bis 6, **dadurch gekennzeichnet, dass** zwischen dem Stator (4) des Elektromotors und der Bewegungsschraube (5) eine Übersetzung vorgesehen ist.

8. Elektromechanische Einrichtung zum Antreiben und/oder Bremsen einer Welle (1), nach Anspruch 7, **dadurch gekennzeichnet, dass** die Übersetzung als Planetengetriebe (9) ausgeführt ist.

9. Elektromechanische Einrichtung zum Antreiben und/oder Bremsen einer Welle (1), nach Anspruch 8,**dadurch gekennzeichnet, dass** der Stator (4) mit dem Sonnenrad des Planetengetriebes (9) drehfest verbunden ist, wobei das Hohlrad an das Gehäuse (3) gekoppelt ist und die Bewegungsschraube (5) mit den Steg des Planetengetriebes (9) verbunden ist.

10. Elektromechanische Einrichtung zum Antreiben und/oder Bremsen einer Welle (1), nach einem der Ansprüche 2 bis 9, **dadurch gekennzeichnet, dass** zur Sicherung der Funktion der Bremse gegen Ausfälle des Elektromotors eine Kupplung (10) vorgesehen ist, durch deren Betätigung die Bremse betätigt wird.

11. Elektromechanische Einrichtung zum Antreiben und/oder Bremsen einer Welle (1), nach Anspruch 10, **dadurch gekennzeichnet, dass** die Kupplung im geschlossenen Zustand den Stator (4) mit der zu bremsenden Welle (1) verbindet und eine Verdrehung des Stators (4) und somit die Betätigung der Bremse verursacht.

12. Elektromechanische Einrichtung zum Antreiben und/oder Bremsen einer Welle (1), nach Anspruch 11, **dadurch gekennzeichnet, dass** die Kupplung (10) elektromagnetisch geöffnet wird.

13. Elektromechanische Einrichtung zum Antreiben und/oder Bremsen einer Welle (1), nach Anspruch 11 oder 12, **dadurch gekennzeichnet, dass** sie zumindest eine Reibfläche (12) aufweist, welche durch die Kraft zumindest einer Feder (13) gegen eine mit der zu bremsenden Welle (1) drehfest verbundene Scheibe (14) gedrückt wird, um eine Verdrehung der Kupplung (10) und somit des mit der Kupplung (10) verbundenen Stators (4) zu bewirken, was in der Betätigung der Bremse resultiert, wobei zum Öffnen der Kupplung (10) eine elektromagnetische Einrichtung betätigt wird, welche die Reibflächen (12) gegen die Kraft der Feder (13) im Öffnungssinne der Kupplung (10) bewegt.

14. Elektromechanische Einrichtung zum Antreiben und/oder Bremsen einer Welle (1), nach Anspruch 10, 12 oder 13, **dadurch gekennzeichnet, dass** die Kupplung als Einflächen-Magnetkraftkupplung ausgebildet ist.

## Claims

1. Electromechanical device for driving and/or braking a shaft (1), wherein the device comprises an electric motor having a rotor (2) which is connected in a rotationally fixed manner to the shaft (1), **characterized in that** a stator (4) which is mounted about the shaft (1) in a housing (3) with a degree of rotational freedom in the circumferential direction in the operating direction of the brake, wherein the stator (4) is operatively connected to the brake pad (7), by means of a device (5) which converts a rotary movement of the stator (4) into an axial movement of at least one axially movably mounted brake pad (7), in such a way that, in generator mode of the electric motor, the stator (4) is rotated relative to the housing (3) by the torque which is produced between the rotor (two) and the stator (4), as a result of which the brake pad (7) is pressed against the brake disc by means of the device (5).

2. Electromechanical device for driving and/or braking a shaft (1) according to Claim 1, **characterized in that** the device (5) is in the form of a drive screw (5) which is designed as a ball screw spindle or a ball ramp and which is operatively connected to the stator (4) on one side and is operatively connected to at least one brake pad (7) on the other side.

3. Electromechanical device for driving and/or braking a shaft (1) according to Claim 2, **characterized in that** the stator (4) is mounted in a manner fixed to the housing from an axial point of view, wherein a rotary movement of the stator (4) when the brake is operated results in an axial movement of the drive screw (5) relative to the stationary housing (3), the said axial movement being transmitted to at least one brake pad (7), which is mounted in an axially movable manner in the housing (3), by means of a bearing (6) for decoupling the rotary movement.

4. Electromechanical device for driving and/or braking a shaft (1) according to Claim 3, **characterized in that**, in the motor mode of the electric motor, the generated drive torque can be supported against a stop in the circumferential direction of the stator (4), as a result of which the said drive torque is transmitted to the shaft (1) by means of the rotor (2).

5. Electromechanical device for driving and/or braking a shaft (1) according to Claim 2, **characterized in that** the stator (4) is fixedly connected to the drive screw (5) and is designed in an axially movable manner depending on the inherent rotary movement, wherein the drive screw (5) is mounted on the housing (3) and is connected in an interlocking manner to the brake pad (7) in the axial direction.

6. Electromechanical device for driving and/or braking a shaft (1) according to Claim 1, **characterized in that**, in the motor mode of the electric motor, the generated drive torque can be supported against an axial housing stop, as a result of which the said drive torque is transmitted to the shaft (1) by means of the rotor (2).

7. Electromechanical device for driving and/or braking a shaft (1) according to one of Claims 2 to 6, **characterized in that** a transmission means is provided between the stator (4) of the electric motor and the drive screw (5).

8. Electromechanical device for driving and/or braking a shaft (1) according to Claim 7, **characterized in that** the transmission means is designed as a planetary gear mechanism (9).

9. Electromechanical device for driving and/or braking a shaft (1) according to Claim 8, **characterized in that** the stator (4) is connected in a rotationally fixed manner to the sun gear of the planetary gear mechanism (9), wherein the hollow gear is coupled to the housing (3) and the drive screw (5) is connected to the spider of the planetary gear mechanism (9).

10. Electromechanical device for driving and/or braking a shaft (1) according to one of Claims 2 to 9, **characterized in that** a clutch (10) which operates the brake as a result of being operated is provided in order to safeguard the functioning of the brake against failure of the electric motor.

11. Electromechanical device for driving and/or braking a shaft (1) according to Claim 10, **characterized in that** the clutch, in the engaged state, connects the stator (4) to the shaft (1), which is to be braked, and causes a rotation of the stator (4) and therefore operation of the brake.

12. Electromechanical device for driving and/or braking a shaft (1) according to Claim 11, **characterized in that** the clutch (10) is electromagnetically disengaged.

13. Electromechanical device for driving and/or braking a shaft (1) according to Claim 11 or 12, **characterized in that** it has at least one friction area (12) which is pressed against a disc (14), which is connected in a rotationally fixed manner to the shaft (1) which is to be braked, by the force of at least one spring (13) in order to rotate the clutch (10) and therefore the stator (4) which is connected to the clutch (10), this resulting in operation of the brake, wherein, in order to disengage the clutch (10), an electromagnetic device is operated, which electromagnetic device moves the friction areas (12) against the force of the spring (13) so as to disengage the clutch (10).

14. Electromechanical device for driving and/or braking a shaft (1) according to Claim 10, 12 or 13, **characterized in that** the clutch is in the form of a single-surface magnetic-force clutch.

## Revendications

1. Équipement électromécanique pour l'entraînement et/ou le freinage d'un arbre (1), l'équipement comprenant un moteur électrique doté d'un rotor (2) relié solidairement en rotation à l'arbre (1), **caractérisé en ce qu'**un stator (4) est disposé, dans la direction périphérique, dans un carter (3), avec un certain degré de liberté de rotation autour de l'arbre (1), dans la direction d'actionnement du frein ;
le stator (4) étant activement relié à la garniture de frein (7) via un équipement (5) convertissant un mouvement de rotation du stator (4) en un mouvement axial d'au moins une garniture de frein (7) disposée de façon à pouvoir coulisser dans le plan axial, de telle sorte qu'en cas de fonctionnement du générateur du moteur électrique, le stator (4) est pivoté par rapport au carter (3) du fait du couple se produisant entre le rotor (deux) et le stator (4), provoquant ainsi la compression de la garniture de frein (7) contre le disque de frein par le biais de l'équipement (5).

2. Équipement électromécanique pour l'entraînement et/ou le freinage d'un arbre (1) selon la revendication 1, **caractérisé en ce que** l'équipement (5) prend la forme d'une vis mobile (5) prenant la forme d'une broche filetée sphérique ou d'une rampe sphérique, ladite vis étant en liaison active d'une part avec le stator (4) et d'autre part avec au moins une garniture de frein (7).

3. Équipement électromécanique pour l'entraînement et/ou le freinage d'un arbre (1) selon la revendication 2, **caractérisé en ce que** le stator (4) est disposé de façon à être fixe par rapport au carter dans le plan axial, un mouvement de rotation du stator (4) provoquant, en cas d'actionnement du frein, un coulissement axial de la vis mobile (5) par rapport au carter (3) fixe sur place, ledit mouvement étant transmis à au moins une garniture de frein (7) disposée de façon à pouvoir coulisser dans le carter (3) dans le plan axial via un palier (6) servant au découplage du mouvement de rotation.

4. Équipement électromécanique pour l'entraînement et/ou le freinage d'un arbre (1) selon la revendication 3, **caractérisé en ce qu'**en cas de fonctionnement motorisé du moteur électrique, le couple d'entraînement produit appuie contre une butée placée dans la direction périphérique du stator (4), permettant ainsi sa transmission à l'arbre (1) via le rotor (2).

5. Équipement électromécanique pour l'entraînement et/ou le freinage d'un arbre (1) selon la revendication 2, **caractérisé en ce que** le stator (4) est relié fixement à la vis mobile (5) et peut être déplacé dans le plan axial en fonction de son mouvement de rotation propre, la vis mobile (5) étant disposée au niveau du carter (3) et étant reliée par complémentarité de formes avec la garniture de frein (7) dans la direction axiale.

6. Équipement électromécanique pour l'entraînement et/ou le freinage d'un arbre (1) selon la revendication 1, **caractérisé en ce qu'**en cas de fonctionnement motorisé du moteur électrique, le couple d'entraînement produit appuie contre une butée de carter axiale, permettant ainsi sa transmission à l'arbre (1) via le rotor (2).

7. Équipement électromécanique pour l'entraînement et/ou le freinage d'un arbre (1) selon l'une quelconque des revendications 2 à 6, **caractérisé en ce qu'**une démultiplication est prévue entre le stator (4) du moteur électrique et la vis mobile (5).

8. Équipement électromécanique pour l'entraînement et/ou le freinage d'un arbre (1) selon la revendication 7, **caractérisé en ce que** la démultiplication prend la forme d'un engrenage planétaire (9).

9. Équipement électromécanique pour l'entraînement et/ou le freinage d'un arbre (1) selon la revendication 8, **caractérisé en ce que** le stator (4) est relié solidairement en rotation à la roue solaire de l'engrenage planétaire (9), la roue creuse étant couplée au carter (3) et la vis mobile (5) étant reliée à l'étai de l'engrenage planétaire (9).

10. Équipement électromécanique pour l'entraînement et/ou le freinage d'un arbre (1) selon l'une quelconque des revendications 2 à 9, **caractérisé en ce que** la sécurisation de la fonction du frein contre les pannes du moteur électrique se fait par le biais d'un embrayage (10) réalisant l'actionnement du frein.

11. Équipement électromécanique pour l'entraînement et/ou le freinage d'un arbre (1) selon la revendication 10, **caractérisé en ce que** l'embrayage relie, à l'état fermé, le stator (4) à l'arbre (1) à freiner et provoque une torsion du stator (4) et ainsi l'actionnement du frein.

12. Équipement électromécanique pour l'entraînement et/ou le freinage d'un arbre (1) selon la revendication 11, **caractérisé en ce que** l'embrayage (10) est ouvert selon un mode électromagnétique.

13. Équipement électromécanique pour l'entraînement et/ou le freinage d'un arbre (1) selon la revendication 11 ou 12, **caractérisé en ce qu'**il comporte au moins une surface de frottement (12) comprimée par la force d'au moins un ressort (13) contre un disque (14) relié solidairement en rotation à l'arbre (1) à freiner, afin de provoquer une torsion de l'embrayage (10) et ainsi du stator (4) relié à l'embrayage (10), ce qui entraîne l'actionnement du frein, un équipement électromagnétique étant actionné pour ouvrir l'embrayage (10), ledit équipement déplaçant les surfaces de frottement (12) contre la force du ressort (13) dans le sens d'ouverture de l'embrayage (10).

14. Équipement électromécanique pour l'entraînement et/ou le freinage d'un arbre (1) selon la revendication 10, 12 ou 13, **caractérisé en ce que** l'embrayage prend la forme d'un embrayage électromagnétique à surface unique.
